# EUROPEAN PATENT SPECIFICATION

(11) **EP 1 585 646 B1**
(45) Date of publication and mention of the grant of the patent: **15.08.2007**
(21) Application number: 03785887.5
(22) Date of filing: 18.12.2003
(51) Int. Cl.: B60N 2/42, B60R 21/20

(54) **SAFETY ARRANGEMENT FOR A VEHICLE SEAT**
SICHERHEITSVORRICHTUNG FÜR EINEN FAHRZEUGSITZ
SYSTEME DE SECURITE D'UN SIEGE DE VEHICULE

(30) Priority: 14.01.2003 GB 0300828
(43) Date of publication of application: 19.10.2005
(73) Proprietor: AUTOLIV DEVELOPMENT AB, 447 83 Vargarda (SE)
(72) Inventor: VAN SLAGMAAT, Marc, F-76220 Gournay-en-Bray (FR)
(74) Representative: Parry, Simon James
(86) International application number: PCT/EP2003/014566
(87) International publication number: WO 2004/062962

(56) References cited:
- DE-A- 19 530 219
- DE-A- 19 549 379
- DE-A- 19 946 406
- US-A- 5 149 165

## Description

**THE PRESENT INVENTION** relates to a safety arrangement, and more particularly relates to a safety arrangement intended to provide protection for an occupant of a motor vehicle in the event that a side-impact should arise.

When a vehicle is involved in a side-impact, the occupants of the vehicle may be very prone to being injured.

Various safety arrangements have been proposed to provide a degree of protection for the occupants of a vehicle in a side-impact situation.

Some of the prior proposed arrangements include air-bags which, when inflated, are located between the occupant of the vehicle and the side of the vehicle. The purpose of the air-bags is to provide a degree of protection for the occupant, and also to try and move the occupant from its initial position towards the centre of the vehicle so that the risk of an impacting vehicle, as it intrudes into the cabin of the vehicle in a side-impact collision, actually making contact with the occupant is reduced.

Many prior proposed systems are designed to apply a controlled force on the side of the seat occupant, mainly in a horizontal direction. Typically inflatable air-bags are provided, located, when inflated, between the side of the vehicle and an occupant, although the padding provided on the door may also be configured to impart a horizontal force to a seat occupant should the door be deflected inwardly by an impacting vehicle.

Only a certain amount of force can be applied to a seat occupant in the thorax region, since if a force above a certain threshold is applied, there is an excessive deflection of the ribs of the seat occupant, giving rise to a substantial risk of injury being imparted to the occupant by the safety arrangement itself.

It is possible to displace a seat occupant laterally by applying force to the pelvis area, thus minimising the risk of injury arising due to rib deflections. However, a horizontal force applied to the pelvis may well tend to rotate the seat occupant about their centre of gravity, which is typically located some centimetres above the pelvic region, and such a rotation would tend to move the thorax and head portion of the seat occupant towards the door, and thus towards the impacting vehicle, which is clearly undesirable.

There is, therefore, a need for a safety arrangement which, when actuated, will tend to move a seat occupant laterally without effecting a substantial rotation to the torso of the seat occupant.

Further there is a need to tend to move a seat occupant as quickly as possible, after a side impact situation has been detected.

DE19946406A1 discloses an arrangement incorporating an air-bag in the side region of a seat squab.

EP1369314A2 discloses another arrangement in the form of an occupant protection apparatus in which an inflatable air-bag is provided in the side region of a seat squab.

The present invention seeks to provide an improved safety arrangement.

According to this invention there is provided a safety arrangement for reducing the risk of injuries occurring to an occupant of a vehicle seat in the event of a side-impact, the safety arrangement comprising a force-applying unit associated with the squab of the seat, the force-applying unit being actuable to apply a force to the pelvic region of a 50 percentile male dummy when the dummy is sitting on the seat, the axis of the force being directed from one side of the seat substantially towards the centre of gravity of the dummy, wherein the force-applying unit comprises an air-bag mounted on the outboard side in the squab of the seat, and means are provided which guide the air-bag during inflation thereof to apply the force to the dummy, wherein the air-bag is mounted on a support (11), the support being defined by the seat squab frame or separate plate attached to the seat squab frame. The air-bag may be fabric, plastic or metal.

In order to guide the air-bag in such direction it is mounted on a support and the support extending in direction substantially perpendicular to the direction of the force. Alternatively the air-bag is mounted on a support which is substantially L-shaped with the bisecting line of an angle between the legs of the support extending in direction of the force. According to a further alternative the air-bag comprises a gas generator unit which is partly enclosed by the a gas deflector, wherein at least one open area is provided which is directed substantially towards the centre of gravity of the dummy, when the air-bag is mounted in the squab of the seat. There is a further embodiment in which the air-bag comprises an upper and a lower wall and two side walls, wherein one side wall is of greater dimension than the other side wall. According to a yet further embodiment the air-bag comprises a first attachment to the support in a first region, where the gas generator unit is located, and the air-bag further comprises a second attachment to the support in a second region remote from the first region. The second attachment is formed from a projection on the support comprising a head and a slit shaped opening in the air-bag, wherein in the assembled and secured condition the head extends through the opening in the interior of the air-bag. In a further modified version the second attachment is formed from an external tether which is attached with one end to the outer surface of the air-bag and with the other end to the support.

In an alternative version of the invention the force-applying unit is located and configured to apply a force to the squab of the seat, tending to cause the squab of the seat to tilt about a notional tilt axis. In one embodiment the tilt axis is on the inboard side of the seat and the force-applying unit is on the outboard side of the seat. The force-applying unit may be a pyrotechnic unit such as a piston-and-cylinder unit or a bellows unit.

In order that the invention may be more readily understood, and so that further features thereof may be appreciated, the invention will now be described, by way of example, with reference to the accompanying drawings in which:
FIGURE 1 is a diagrammatic view of the squab of a seat provided with a safety arrangement in accordance with a first alternative of the invention, with the seat being occupied by a dummy,
FIGURE 2 is a view, corresponding to Figure 1, illustrating a second alternative of the invention, and
FIGURE 3 is a view corresponding to Figures 1 and 2 provided for purposes of explanation, and
FIGURE 4 is a view corresponding to Figures 1 and 2 illustrating a schematic view of a first embodiment of the first alternative of the invention, and
FIGURE 5 is a view corresponding to Figures 1 and 2 illustrating a schematic view of a second embodiment of the first alternative of the invention, wherein the air-bag is shown in the inflated condition, and
FIGURE 6 is a view corresponding to Figure 5, wherein the air-bag is shown in the stored condition, and
FIGURE 7 is a view corresponding to Figure 6, wherein the air-bag is shown in a further alternative of stored condition, and
FIGURE 8 is a view corresponding to Figures 1 and 2 illustrating a detailed view of the air-bag according to a third embodiment of the first alternative of the invention, and
FIGURE 9 is a view corresponding to Figures 1 and 2 from an inverted direction illustrating a schematic view of the air-bag according to a fourth embodiment of the first alternative of the invention, wherein the air-bag is shown in the stored condition, and
FIGURE 10 is a view corresponding to Figure 9, wherein the air-bag is shown in the inflated condition, and
FIGURE 11 is a view corresponding to Figure 9, wherein the air-bag is shown in a further alternative of stored condition, and
FIGURE 12 is a view corresponding to Figures 1 and 2 illustrating a schematic view of the air-bag according to a fifth embodiment of the first alternative of the invention.

As will become clear from the following description, in embodiments of the invention a force-applying unit is provided which is associated with the squab of a vehicle seat which applies a force to the pelvic region of a seat occupant, that force being directed substantially towards the centre of gravity of the seat occupant. Of course, in designing such a system, it is not possible to know precisely where the centre of gravity of the seat occupant will be located, since the seat may, in different circumstances, be occupied by a relatively light female having a relatively small frame, or by a relatively heavy male having a large frame. Designers of safety equipment typically design the equipment for optimum performance with a specific dummy, which is known as the 50 percentile male dummy. A specific dummy, known as Eurosid-1, is a typical 50 percentile male dummy. Thus the present invention will be described with reference to a dummy of this type representing the occupant of a seat.

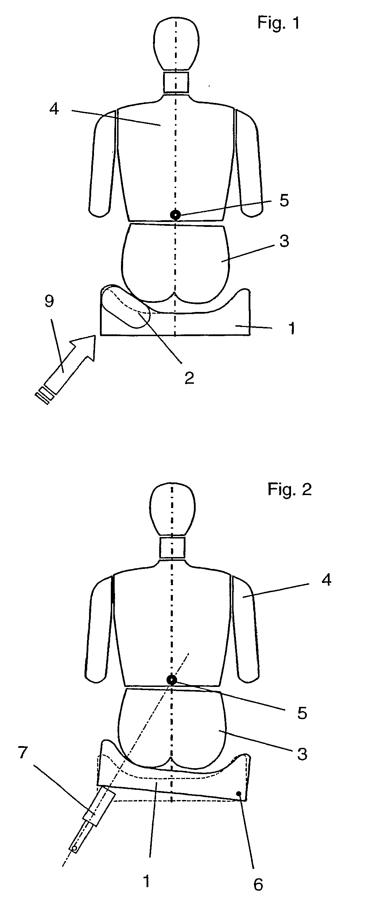

Referring initially to Figure 1 of the accompanying drawings, the squab 1 of a vehicle seat is illustrated, and, mounted within the squab 1, towards the rear of the squab and to one side of the squab is an air-bag 2. The air-bag is located within the fabric covering of the seat squab. The air-bag may be a fabric air-bag, or of plastic, but is preferably a metal air-bag adapted to be deformed plastically on deployment thereof. The air-bag 2 is located in part of the seat that will be engaged by the buttocks or pelvic region 3 of a seat occupant which, in Figure 1, is represented by a dummy 4 which is a 50 percentile male dummy. The centre of gravity 5 of the dummy is illustrated, the centre of gravity being located above the pelvic region 3.

The air-bag 2 is configured so that, on actuation thereof, the air-bag will apply a force to the pelvic region 3 of the dummy 4 as indicated by the arrow 9. The force is substantially directed towards the centre of gravity 5 of the dummy 4. It has been found that such straight direction of force towards the centre of gravity 5 of the dummy 4 enables a very quick timing of the movement of the dummy 4.

It is therefore to be appreciated that on actuation of the air-bag 2, a lateral and upward force will be applied to the pelvic region 3 of the dummy 4 in substantial alignment with the centre of gravity 5. The force will thus not have any substantial tendency to cause the dummy to rotate, but instead will impart an upward and lateral movement to the dummy.

It is, of course, to be understood that the seat will be mounted in a vehicle in such a way that the air-bag 2 is on the outboard side of the vehicle. In response to a side-impact the air-bag 2 may be actuated, thus moving the dummy upwardly and inwardly away from the side of the vehicle where the impacting vehicle is intruding into the vehicle cabin. The air-bag 2 may be retained within the fabric covering of the seat squab during deployment, but (especially if the air-bag 2 is made of fabric) the air-bag may burst through the seat squab covering. Of course, a thorax bag may be provided on the backrest of the seat to be inflated and located in position between the thorax of the dummy and the intruding vehicle to provide added protection.

Turning now to Figure 2, which corresponds substantially with Figure 1, like references will be used to like parts which will not be re-described in detail. In this embodiment the squab 1 has an initial position shown in phantom, and is capable of tilting about a notional tilting axis 6 to have the final tilted position shown in solid lines. The tilting axis 6 is located adjacent the inboard side edge of the squab, and is in alignment with the axis of the vehicle in which the seat is to be mounted. The other side of the squab is provided with a force-applying unit 7 in the form of a pyrotechnic unit which is capable of expanding when actuated. The pyrotechnic unit may be of the piston-and-cylinder type, but may also be an expanding bellows or some other extensible unit. The force-applying unit 7 is connected to part of the squab 1 which is remote from the notional tilting axis 6, on the outboard side of the seat when the seat is in use, and is positioned to engage part of the floor pan of the vehicle. The force-applying unit is adapted to apply a force to the squab along an axis which is directed substantially towards the centre of gravity 5 of the dummy 4.

It is to be appreciated that on deployment of the safety device shown in Figure 2, the extensible force-applying unit becomes extended, applying a force to the squab 1 of the seat which is directed substantially towards the centre of gravity of the occupant which causes the squab 1 of the seat to tilt about the notional tilting axis 6. Thus the squab of the seat applies a force to the buttocks or pelvic region 3 of the dummy which is directed towards the centre of gravity of the dummy, and which thus tends to move the dummy upwardly and inwardly away from the side of the vehicle where the impacting vehicle is intruding in to the vehicle cabin.

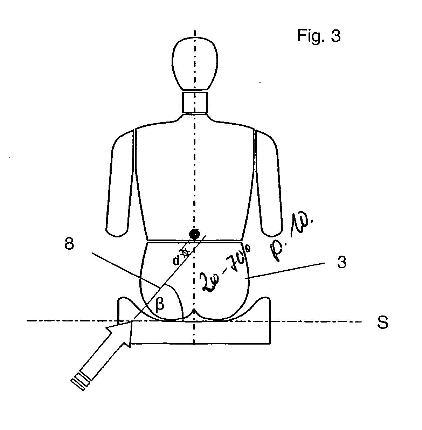

It is to be understood that the axis of the force applied to the pelvic region of the dummy need not be precisely aligned with the centre of gravity of the dummy. Figure 3 is a diagrammatic figure corresponding to Figure 1 and 2 showing that the line of force 8 may be off-set from the centre of gravity of the dummy by a relatively small distance "d". The effect of such an off-set will be to impart a very slight rotational force to the torso of the dummy, but the most substantial movement of the dummy will be upwards and inwards, thus moving the dummy away from the intruding vehicle. Figure 3 further shows an angle P which is taken in the region, where the force-applying unit is located, between a substantially horizontal seat squab seat plane S and the line of force 8. It has been found that the force line may have an angle β between 20° and 70° Within this range an effect occurs as described above with the small distance "d", wherein no or only a very slight rotational force is applied to the torso of the dummy. In any case the most substantial movement of the dummy will be upwards and inwards, if the force line is within the range of the angle β. In the following embodiments it is shown how the air-bag 2 can be guided in direction within the range of angle β.

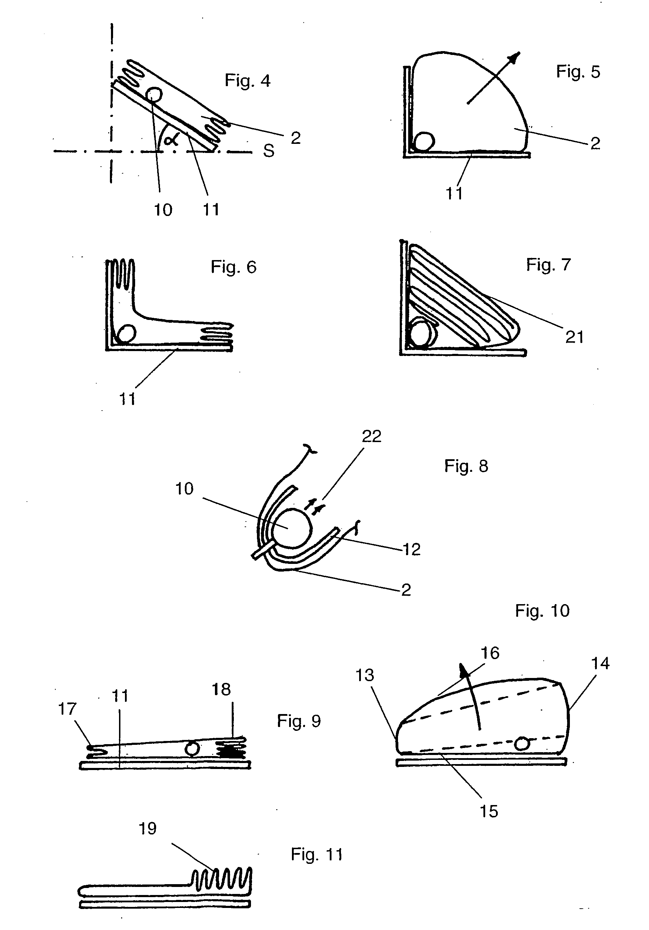

Figure 4 illustrates the mounting arrangement of the air-bag 2 containing a gas generator 10 inside which is attached to a support 11. The support 11 may be the seat squab frame or a separate plate which is attached to the seat squab frame. As can be seen the support 11 is arranged in an inclined manner in relation to the seat squab seat plane S. The inclined mounting of the air-bag 2 guides the air-bag 2 in direction substantially towards the centre of gravity 5 of the dummy with the line of force 8 being substantially perpendicular to the extension of the support 11. The angle α of inclination may vary for each individual seat arrangement in which the air-bag may be spaced at individual positions. It is to be understood that by adding angle α to angle β a right angle of 90° is the sum in any case.

A further alternative of guiding the air-bag 2 in direction substantially towards the centre of gravity 5 of the dummy 4 is shown in Figure 5. The support 11 has the shape of an "L" having substantially a right angle between the two legs thereof. The air-bag 2 is mounted between the legs with the gas generator 10 located right in the corner between the two legs. As shown by the arrow the air-bag 2 will tend to move mainly in direction of the bisecting line of the L-shaped support 11 which is substantially in line with the direction towards the centre of gravity 5 of the dummy 4. Figure 6 shows the arrangement of the air-bag 2 in the stored condition, wherein the air-bag 2 is folded in bellow-shape at the two free ends of the legs of the support 11 with the single folds being parallel to the legs of the support 11. Figure 7 shows an alternative concept of storing the air-bag 2 with a different folding. The air-bag 2 is folded in a zigzag manner, wherein the single folds extend perpendicularly to the line of force 8 which substantially corresponds to the bisecting line of the L-shaped support 11. The air-bag 2 is kept in its stored condition by a cover 21 which encloses the air-bag 2. The cover 2 comprises a weakened portion which breaks after the air-bag 2 has been activated.

Figure 8 shows a detailed view of the gas generator unit 10 which is an ordinary tubular gas generator with gas outlet openings and bolts for attaching it to the support 11. The gas generator 10 is partly enclosed by a gas deflector 12 which on the one hand protects the air-bag material from the hot gas being produced by the gas generator 10 and which on the second hand leaves an open area 22 free for escape of the gas into the air-bag 2. By guiding the gas in direction to the open area 22 such inflation of the air-bag 2 guides the air-bag 2 so that it tends to move in a corresponding direction. However, such direction may be directed substantially towards the centre of gravity of the dummy. The open area 22 may be openings in a tubular deflector 12 or a free space between the free ends of the deflector 12.

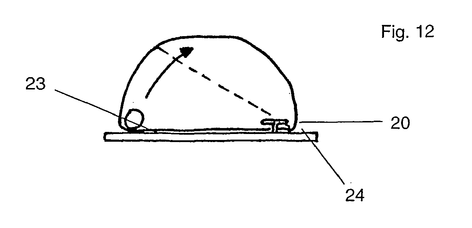

A further alternative of guiding the air-bag 2 substantially towards a direction of centre of gravity 5 of the dummy show Figures 9 and 10 from an inverted direction of view. The air bag has an upper and a lower wall 16, 15 and two side walls 13, 14, wherein the side wall 14 on the right hand sight is of greater dimension than the side wall 13 on the left hand side of the air-bag 2. Figure 9 shows the same air-bag 2 in the stored condition in which the air-bag 2 is again folded in bellow shape with the single folds being substantially parallel to the extension of the support 11. As can be clearly seen from Figure 9 the folding package 18 on the right hand side of the air-bag 2 is of greater dimension as the folding package 17 on the left hand side of the air-bag 2. However, the side wall 14 of greater dimension is meant to be located on the outboard side of the air-bag 2, when the air-bag 2 is mounted in the squab 1 of the seat. According to the direction of the arrow in Figure 10 the air-bag 2 tends to move in direction towards the centre of gravity 5 of the dummy 4. Figure 11 shows an alternative of a stored air-bag 2 in which the folding is formed differently. There is folding only arranged on the right hand side of the air-bag 2 and the single folds are directed perpendicularly to the extension of the support 11. As shown in Figure 10 the air-bag 2 may be assembled from three material pieces. The phantom lines show the attachment lines, where the three pieces may be secured to each other by sewing, welding or glueing.

Turning now to Figure 12, it shows a further embodiment of guiding an air-bag 2 by utilising a first attachment of the air-bag 2 to the support 11 in the first region 23 in which the gas generator unit 10 is located. Further on the air-bag 2 comprises a second attachment to the support 11 in the second region 24 which is located remote from the first region 23. For the first attachment the bolts of the gas generator 10 are secured to the support via preferably a bolt and nut connection. However, any other commonly used connection could utilised. The second attachment is formed from a slit shaped opening in the air-bag 2 and a projection 20 which is formed in the support 11. The projection comprises an elongate head which is inserted through the slit shaped opening in a rotating movement, when both the head and slit directions correspond to each other, and is secured by an inverted rotating movement, when the direction of the slit and the elongate head are perpendicular to each other.

As can be seen from Figure 12 the air-bag 2 has the shape of a half-bowl in the inflated condition. This is clearly different from an ordinarily attached air-bag which tends to become the shape of a complete bowl. Due to the half-bowl shape the force of the air-bag 2 is directed substantially towards the direction of the centre of gravity 5 of the dummy 4. The air-bag 2 may be assembled from two material pieces; the phantom line in Figure 12 shows the attachment line, where the two pieces are joined to each other.

It is to be understood that the attachments of the air-bag 2 could be utilised differently. The second attachment could be arranged by an external tether which is connected to the air-bag 2 with one end and to the support 11 with the other end.

In the present Specification "comprises" means "includes or consists of" and "comprising" means "including or consisting of".

## Claims

1. A safety arrangement for reducing the risk of injuries occurring to an occupant of a vehicle seat in the event of a side-impact, the safety arrangement comprising a force-applying unit (2,7) associated with the squab (1) of the seat, the squab comprising a frame, and the force-applying unit (2,7) being actuable to apply a force to the pelvic region (3) of a 50 percentile male dummy (4) when the dummy is sitting on the seat, the axis of the force being directed from one side of the seat substantially towards the centre of gravity (5) of the dummy (4), **characterised in that** the force-applying unit comprises an air-bag (2) mounted on the outboard side in the squab (1) of the seat, and means are provided which guide the air-bag (2) during inflation thereof to apply the force to the dummy (4), wherein the air-bag is mounted on a support (11), the support being defined by the seat squab frame or a separate plate attached to the seat squab frame.

2. An arrangement according to claim 1 wherein the air-bag (2) is a fabric air-bag.

3. An arrangement according to claim 1 wherein the air-bag (2) is a plastic air-bag.

4. An arrangement according to claim 1 wherein the air-bag (2) is a metal air-bag.

5. An arrangement according to any preceding claim, wherein the support (11) extends in a direction substantially perpendicular to the direction of the force.

6. An arrangement according to any one of claims 1 to 4, wherein the support (11) is substantially L-shaped with the bisecting line of an angle between the legs of the support (11) extending in direction of the force.

7. An arrangement according to any preceding claim, wherein the air-bag (2) comprises a gas generator unit (10) being partly enclosed by a gas deflector (12), wherein at least one open area (22) is provided which is directed substantially towards the centre of gravity (5) of the dummy (4), when the air-bag (2) is mounted in the squab (1) of the seat.

8. An arrangement according to any one preceding claim, wherein the air-bag (2) comprises an upper and a lower wall (16,15) and two side walls (13,14), wherein one side wall (14) is of greater dimension than the other side wall (13).

9. An arrangement according to any one of claims 1 to 7, wherein the air-bag 2 comprises a first attachment to a support (11) in a first region (23), where the gas generator unit (10) is located, and the air-bag (2) further comprises a second attachment to the support (11) in second region (24) remote from the first region (23).

10. An arrangement according to claim 9 wherein the second attachment is formed from a projection (20) on the support (11) comprising a head and a slit-shaped opening in the air-bag (2), wherein in the assembled and secured condition the head extends through the opening in the interior of the air-bag (2).

11. An arrangement according to claim 9 wherein the second attachment is formed from an external tether which is attached with one end to the outer surface of the air-bag (2) and with the other end to the support (11).

## Patentansprüche

1. Sicherheitsvorrichtung zur Verminderung des Verletzungsrisikos für einen Sitzinsassen im Falle eines Seitenaufpralls, wobei die Sicherheitsvorrichtung eine mit dem Sitzkissen (1) verbundene kraftwirkende Einheit (2, 7) umfasst, wobei das Sitzkissen einen Rahmen umfasst und die kraftwirkende Einheit (2, 7) betätigbar ist, um eine Kraft auf den Beckenbereich (3) einer männlichen 50 Prozent Testpuppe (4) einwirken zu lassen, wenn die Testpuppe auf dem Sitz platziert ist, wobei die Kraftachse von einer Seite des Sitzes im Wesentlichen auf den. Schwerpunkt (5) der Testpuppe (4) gerichtet ist, **dadurch gekennzeichnet dass** die kraftwirkende Einheit einen auf der äußeren Seite des Sitzkissens (1) montierten Airbag (2) umfasst und Mittel bereitgestellt sind, die den Airbag (2) während seines Aufblasens so führen, dass die Kraft auf die Testpuppe (4) wirkt, wobei der Airbag auf einer Auflage (11) montiert ist und die Auflage durch den Sitzkissenrahmen oder eine am Sitzkissemahmen befestigte separate Platte definiert ist.

2. Vorrichtung nach Anspruch 1, bei welcher der Airbag (2) ein Stoffairbag ist.

3. Vorrichtung nach Anspruch 1, bei welcher der Airbag (2) ein Plastikairbag ist.

4. Vorrichtung nach Anspruch 1, bei welcher der Airbag (2) ein Metallairbag ist.

5. Vorrichtung nach einem der vorhergehenden Ansprüche, bei welcher sich die Auflage (11) im Wesentlichen senkrecht zur Kraftrichtung erstreckt.

6. Vorrichtung nach einem der Ansprüche 1 bis 4, bei welcher die Auflage (11) im Wesentlichen eine L-Form besitzt, wobei sich die Mittellinie eines Winkels zwischen den Schenkeln der Auflage (11) In Kraftrichtung erstreckt.

7. Vorrichtung nach einem der vorhergehenden Ansprüche, bei welcher der Airbag (2) eine Gasgeneratoreinheit (10) umfasst, die teilweise von einem Gasdeflektor (12) umschlossen ist, wobei mindestens eine offene, im Wesentlichen zum Schwerpunkt (5) der Testpuppe (4) gerichtete Fläche (22) bereitgestellt ist, wenn der Airbag (2) im Sitzkissen (1) des Sitzes montiert ist.

8. Vorrichtung nach einem der vorhergehenden Ansprüche, bei welcher der Airbag (2) eine obere und eine untere Wand (16, 15) und zwei Seitenwände (13, 14) umfasst, wobei eine Seitenwand (14) von größeren Ausmaßen ist als die andere Seitenwand (13).

9. Vorrichtung nach einem der Ansprüche 1 bis 7, bei welcher der Airbag (2) eine erste Befestigung an der Auflage (11) in einem ersten Bereich (23), wo die Gasgeneratoreinheit (10) platziert ist, umfasst und der Airbag (2) weiterhin, eine zweite Befestigung an der Auflage (11) in einem von dem ersten Bereich (23) entfernt liegenden zweiten Bereich (24) umfasst.

10. Vorrichtung nach Anspruch 9, bei welcher die zweite Befestigung durch einen auf der Auflage (11) befindlichen Vorsprung (20) mit einem Kopf sowie eine schlitzförmige Öffnung im Airbag (2) gebildet ist, wobei sich im zusammengefügten und gesicherten Zustand der Kopf durch die Öffnung in das Innere des,Airbags (2) erstreckt.

11. Vorrichtung nach Anspruch 9, bei welcher die zweite Befestigung von einem externen Haltegurt gebildet ist, der mit dem einen Ende an der äußeren Oberfläche des Airbags (2) und mit dem anderen Ende an der Auflage (11) befestigt ist.

## Revendications

1. Dispositif de sécurité pour réduire le risque de blessure sur un occupant d'un siège de véhicule dans le cas d'un choc latéral, le dispositif de sécurité comprenant une unité d'application de force (2, 7) associée au coussin (1) du siège, le coussin comprenant un châssis, et l'unité d'application de force (2, 7) pouvant être actionnée pour appliquer une force sur la région du bassin (3) d'un mannequin homme du 50ième centile (4) lorsque le mannequin est assis sur le siège, l'axe de force étant dirigé à partir d'un côté du siège sensiblement vers le centre de gravité (5) du mannequin (4), **caractérisé en ce que** l'unité d'application de force comprend un coussin de sécurité (2) monté du côté externe dans le coussin (1) du siège, et on prévoit des moyens qui guident le coussin de sécurité (2) pendant son gonflage pour appliquer la force sur le mannequin (4), dans lequel le coussin de sécurité est monté sur un support (11), le support étant défini par le châssis du coussin de siège ou une plaque séparée fixée au châssis de coussin de siège.

2. Agencement selon la revendication 1, dans lequel le coussin de sécurité (2) est un coussin de sécurité en tissu.

3. Dispositif selon la revendication 1, dans lequel le coussin de sécurité (2) est un coussin de sécurité en plastique.

4. Dispositif selon la revendication 1, dans lequel le coussin de sécurité (2) est un coussin de sécurité en métal.

5. Dispositif selon l'une quelconque des revendications précédentes, dans lequel le support (11) s'étend dans une direction sensiblement perpendiculaire à la direction de la force.

6. Dispositif selon l'une quelconque des revendications 1 à 4, dans lequel le support (11) est sensiblement en forme de L dont la bissectrice d'un angle entre les pattes du support (11) s'étend dans la direction de la force.

7. Dispositif selon l'une quelconque des revendications précédentes, dans lequel le coussin de sécurité (2) comprend une unité de générateur de gaz (10) qui est partiellement enfermée par un déflecteur de gaz (12), dans lequel on prévoit au moins une surface ouverte (22) qui est dirigée sensiblement vers le centre de gravité (5) du mannequin (4), lorsque le coussin de sécurité (2) est monté dans le coussin (1) du siège.

8. Dispositif selon l'une quelconque des revendications précédentes, dans lequel le coussin de sécurité (2) comprend une paroi supérieure et une paroi inférieure (16, 15) et deux parois latérales (13, 14), dans lequel une paroi latérale (14) a une dimension plus grande que l'autre paroi latérale (13).

9. Dispositif selon l'une quelconque des revendications 1 à 7, dans lequel le coussin de sécurité (2) comprend une première fixation à un support (11) dans une première région (23), où l'unité de générateur de gaz (10) est située, et le coussin de sécurité (2) comprend en outre une seconde fixation au support (11) dans la seconde région (24) à distance de la première région (23).

10. Dispositif selon la revendication 9, dans lequel la seconde fixation est formée à partir d'une saillie (20) sur le support (11) comprenant une tête et une ouverture en forme de fente dans le coussin de sécurité (2) dans lequel dans la condition assemblée et fixée, la tête s'étend à travers l'ouverture dans l'intérieur du coussin de sécurité (2).

11. Dispositif selon la revendication 9, dans lequel la seconde fixation est formée à partir d'une attache externe qui est fixée avec une extrémité sur la surface externe du coussin de sécurité (2) et avec l'autre extrémité sur le support (11).
